# EUROPEAN PATENT SPECIFICATION

(11) **EP 0 484 450 B1**
(45) Date of publication and mention of the grant of the patent: **07.09.1994**
(21) Application number: 90912652.6
(22) Date of filing: 30.07.1990
(51) Int. Cl.: G02B 26/02

(54) **FIBRE MODULATORS**
FASERMODULATOREN
MODULATEURS A FIBRES

(30) Priority: 31.07.1989 GB 8917454; 07.12.1989 GB 8927698
(43) Date of publication of application: 13.05.1992
(73) Proprietor: BRITISH TELECOMMUNICATIONS public limited company, London EC1A 7AJ (GB)
(72) Inventor: HICKS, Andrew, Martin, Ipswich Suffolk IP4 5AG (GB); WILKINSON, Iain, John, Felixtowe Suffolk IP11 9AJ (GB); ACHURCH, Nicholas, Edward, Woodbridge Suffolk IP12 3QZ (GB); HORNUNG, Stephen, Diss Norfolk IP21 5PP (GB)
(74) Representative: Pratt, David Martin
(86) International application number: GB9001179
(87) International publication number: WO9102276

(56) References cited:
- EP-A- 0 284 382
- WO-A-84/01835
- DE-A- 2 930 454
- FR-A- 2 613 844
- GB-A- 1 460 211
- GB-A- 2 079 932
- GB-A- 2 190 211
- GB-A- 2 207 254
- US-A- 4 342 907
- APPLIED PHYSICS LETTERS, vol. 30, no. 2, 15 January 1977, American Institute of Physics, D.F. Nelson et al.: "Vibration-induce modulation of fiberguide transmission", pp 94-96
- PATENT ABSTRACTS OF JAPAN, vol. 6, no. 51 (P-108)(929), 6 April 1982 ; & JP-A-56 164 305
- IBM TECHNICAL DISCLOSURE BULLETIN, vol. 16, no. 8, January 1974, K. Kaser et al.: "Push-buttom switches for optical fibres", p 2452
- FERNSEH-UND KINO-TECHNIK, vol. 40, no. 7, 1986, R. Herber: "Faseroptische Mikrophone", pp 309-312
- APPLIED PHYSICS LETTERS, vol. 35, no. 12, 15 December 1979, American Institute of Physics, S.K. Sheem et al.: "Polarization effects on single-mode optical fiber sensors", pp 914-917

## Description

This invention relates to modulation techniques for optical communication systems, and in particular to modulation of light guided in an optical fibre.

In many instances, it is desirable to be able to modulate light within an optical fibre, without conducting light from the fibre through a separate modulation element. One such technique, for providing a clip-on supervisory channel, is disclosed in the specification of our copending patent application 8909944. 4, in which the preferred embodiment comprises a small radius mandrel mounted on a loudspeaker coil, the mandrel impinging on an optical fibre to impart transient deformation to the fibre in accordance with the coil movement. This provides amplitude modulation of the light in the fibre, by virtue of differential losses from the fibre dependent upon the deformation.

A significant problem within an optical communication network is the provision of flexibility points at which expansion, or rearrangement, of the network can subsequently be made. For flexibility, it is desirable to maximise the number of potential coupling or tapping points. This is not possible if there is significant loss at the tapping points not utilised.

The aim of the present invention is to provide in-fibre modulation, and also to provide low-loss potential tapping points.

The present invention provides an optical signal modulator formed by an optical fibre assembly comprising an optical fibre for carrying an optical signal to be modulated, the optical fibre having a tapered portion suspended between two support members without any intermediate support, and means for applying a modulation signal perturbation directly to the suspended tapered portion to vary the percentage transmission through the fibre by distorting the waveguide geometry of the suspended tapered portion and thereby causing coupling of the modes of the optical signal carried by the tapered portion into higher order bound modes in accordance with the modulation signal.

Preferably, the suspended tapered portion of the optical fibre is supported, under tension, between the two support members.

Advantageously, the tapered portion comprises a fibre tapered by heating and drawing, the minimum radius of the tapered portion being 20 microns. Alternatively, the optical fibre assembly is constituted by two optical fibres fused together to form a fused fibre coupler.

Preferably, the perturbation applying means comprises a vibratile member, such as a piezo-electric device. The vibratile member may impart a lateral deformation, or changes in tension, to the tapered portion. The tapered portion may also be provided with an etched grating on its surface.

The invention further provides a method of modulating, as defined in claim 14.

The invention will now be described in greater detail, by way of example, with reference to the accompanying drawings, in which:
Figure 1 illustrates an embodiment of the invention in which a tapered fibre is subjected to lateral deformation;
Figure 2 shows an embodiment in which a fused coupler is subjected to varying longitudinal tension; and
Figure 3 shows a modified form of the embodiment shown in Figure 2 in which a fused coupler is connected to a reflector loop.

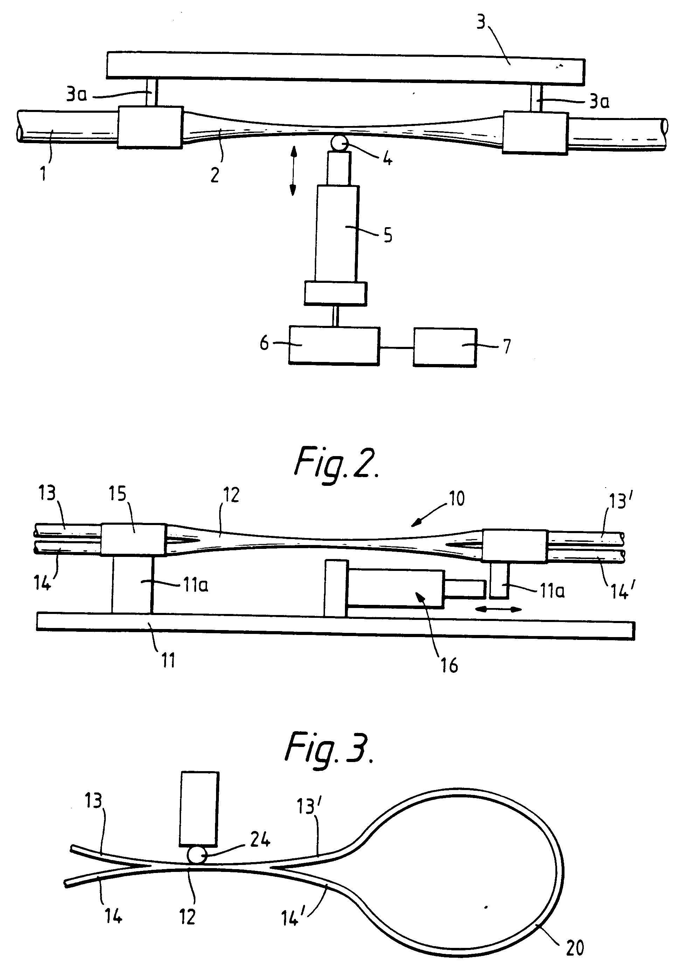

Referring to the drawings, Figure 1 shows an optical fibre 1 which carries an optical beam such as a CW laser beam. A portion 2 of the fibre 1 that has previously been tapered, for example to a minimum radius of about 20 microns (although larger or smaller minimum radii are possible), is supported by a substrate 3 having arms 3a attached to the fibre, for example by glue or cement, at each side of the tapered portion, so that the tapered portion is suspended between the arms. It has been found that a suitable tapered portion 2, having an overall reduced diameter length of about 27mm, can be produced by heating and drawing a standard optical fibre at 1700°C. The insertion loss of such a tapered portion 2 is typically 0.05 dB. The supporting substrate 3 may be of any suitable material, but is preferably made of silica or some other material having a thermal expansion matched to that of the fibre 1.

The tapered portion 2 of the fibre 1 is positioned adjacent to a modulation means that operates by deforming the tapered portion of the fibre by a greater or lesser extent causing a greater or lesser power loss from the fibre. In the embodiment shown in Figure 1, the deformation is achieved by physical contact of a vibratile member 4 with the tapered portion 2 of the fibre 1 to produce a lateral deformation, but analagous lateral deformation could also be produced by electrostatic means. In the Figure 1 embodiment the vibratile member 4 is constituted by a pin mounted on a piezo-electric crystal 5, although alternative structures such as a shaped piezo-electric crystal could equally well be used. The piezo-electric crystal 5 is driven by a signal generator 6 that controls a variable voltage driver unit 7. For drive voltages of the order of 3 to 40 volts a longitudinal movement of the piezo-electric crystal 5 of typically 5 to 15 microns is obtained.

For efficient modulation, it is desirable to drive the piezo-electric crystal 5 so that it vibrates at, or close to, its resonant frequency. The frequency at which the piezo-electric crystal 5 resonates for a given material is dependent upon the piezo thickness and diameter. This resonant frequency is used, in a manner described below, as a carrier frequency for modulation with an information signal. The carrier (resonant) frequency for a piezo-electric crystal 5 can be varied slightly (by up to about 5 KHz) by varying the force of the vibratile member 4 against the fibre 1.

With the tapered portion 2 of the fibre 1 oscillating at the resonant frequency of the piezo-electric crystal 5, due to driven contact with the vibratile member 4, a harmonic oscillating amplitude optical output is produced in the output optical beam. This output constitutes a carrier frequency which may be modulated with an information signal by modulating the oscillation of the vibratile member 4. A simple amplitude modulation superimposed on the oscillation of the voltage of the driver unit 7 will cause the amplitude of the piezo-electric vibration to be likewise modulated, which in turn will modulate the degree of bending that the piezo-electric movement imposes on the tapered portion 2 of the fibre 1, and this will result in a corresponding amplitude modulation superimposed on the output optical beam. An alternative modulation technique is to vary the frequency of the piezo-electric vibration, for example within + 5 KHz of the resonant frequency of the piezo-electric crystal 5. This may be done by frequency modulating the voltage oscillations of the driver unit 7. Both frequency modulation and amplitude modulation of the tapered portion 2 may be utilised simultaneously. Other modulation techniques may also be employed.

Modulation in the tapered portion 2 of the fibre 1 is caused by the loss in this portion which results from deformation by the vibratile member 4. If we neglect the effect of the core of the tapered portion 2 of the fibre 1, it can be considered as strongly guided, multi-moded waveguide with a normalised frequency, V≃100, its bound modes being guided by the cladding-air interface. The taper is sufficiently slight that only the HE₁₁ mode is excited.

In operation, a deformation is introduced into the tapered portion 2 of the fibre 1 by activating the vibratile member 4. This distorts the waveguide geometry, causing coupling to higher order bound modes. These higher order modes become leaky modes at the far end of the tapered portion 2 of the fibre 1, and only light in the HE₁₁ local mode is guided back into the fibre core. This, therefore, provides a method of amplitude modulating a signal through the tapered portion 2 of the fibre 1. By coupling more light into high order modes, the insertion loss of the tapered portion 2 can be increased.

In the embodiment of Figure 1, the fibre 1 is deformed laterally in order to provide a loss-modulated output signal. Longitudinal deformation, ie tension may also be utilised. In this case, the sensitising of the fibre 1 to the tension changes is preferably by way of a fibre coupler. Figure 2 illustrates a system utilising a fused or twisted fibre coupler, but an analagous technique can be applied to other sensitised fibres.

Referring to Figure 2, a fused (or twisted and fused) fibre coupler 10 is mounted through silica channels 15 and between arms 11a attached to a substrate block 11. The fused coupler 10 is formed by fusing two optical fibres, these fibres being denoted by the reference numerals 13 and 14 on one side of the coupler, and by the reference numerals 13′ and 14′ on the other side of the coupler. The substrate block 11 incorporates a piezo-electric device 16 that is driven in a manner similar to that described with reference to Figure 1. The fused coupler 10 is fabricated under tension such that light is coupled straight through along the tapered portion 12 from the fibre 13 to the fibre 13′. Changes in the tension of the coupler 10, whether by extension or contraction, will change the coupling ratio so that some of the light will be coupled into the fibre 14′, which may be regarded as an auxilliary fibre. Thus, a piezo-electric vibration transferred longitudinally to the fibre coupler 10 will provide a cyclical amplitude-modulated output signal in the transmission fibre 13′ due to cyclic changes in the coupling ratio. An inverse modulation appears on the auxilliary fibre 14′, and this too may be utilised, especially if the initial coupling ratio is set to non-zero, for example to 50%. Frequency-modulated or amplitude-modulated information signals may be superimposed on the piezo-electric (or other) vibration in a manner similar to that previously described to provide a corresponding modulation on the output signal.

A modification to the embodiment of Figure 2 is to provide a means for adjusting the basic tension of the coupler 10. In this way, couplers located in a transmission line at various access points may be tensioned so that there is no net coupling out from the main transmission fibre. When it is desired to provide, either on a temporary or permanent basis, an expansion of the network, the coupler tension is adjusted so that a desired degree of tapping is provided. Alternatively, the relative power distribution between branches may be varied in order to increase the capacity of one of the branches by varying the tension. The change in tension may be brought about by longitudinal movement of the support arms 11a, or by bending the assembly with the coupler 10 on the inside of the bend.

Figure 3 shows a modification of the system shown in Figure 2. In this modification a loop reflector 20 is contiguous with the fibres 13′ and 14′. In practice, the device of Figure 3 is formed from a single fibre which is folded back on itself to form the loop 20. The fused coupler 10 is then formed in the normal manner by heating and then drawing the fibres, thereby defining the fibres 13 and 14 on one side of the coupler, and the fibres 13′ and 14′ on the other side of the coupler.

The fused coupler 10 is arranged to have a 50/50 coupling ratio, so that, when there is no distortion of the tapered portion 12 of the coupler, all the light passing along the fibre 13 is reflected back into the same fibre, so that the loop reflector 20 acts as a perfect mirror.

When the tapered portion 12 is distorted by modulation, additional loss mechanisms come into play due to changes in the coupling ratio of the coupler 10. A vibratile member 24 (similar to the vibratile member 4 of the Figure 1 embodiment) is provided for deforming the tapered portion 12 of the coupler 10. The changes in the coupling ratio mean that not all the light is coupled back into the fibre 13 after it has travelled around the loop 20, some of the light being coupled into the fibre 14. The fibre 14 has a terminator to prevent light coupled into this fibre being reflected back into the tapered portion 12. Because the signal passes along the tapered portion 12 twice the depth of modulation is increased.

Modulation by lateral deformation as shown in Figures 1 and 3 is preferable to the longitudinal deformation modulation method of Figure 2, because it is easier to achieve, and higher frequencies of modulation are possible.

Modulators constructed in accordance with the invention can work with carrier frequencies of up to 3 MHz and bandwidths of 30 KHz. A number of channels can be carried on a single fibre using piezo devices operating at different frequencies, the channels being recovered by electrical filtering.

An advantage of the embodiment of Figure 3 is that modulators of this type can be used as customer premises transmitters in a TPON (telephony on the passive optical network) system. Thus, expensive and potentially dangerous lasers do not have to be provided at customers premises, thereby reducing the cost of a TPON system and making it safer.

The taper of the single fibre of the embodiment of Figure 1 may also be formed mechanically, and possibly asymmetrically. Further sensitisation could be achieved by etching a grating on to the tapered portion 2.

## Claims

1. An optical signal modulator formed by an optical fibre assembly comprising an optical fibre for carrying an optical signal to be modulated, the optical fibre having a tapered portion suspended between two support members without any intermediate support, and means for applying a modulation signal perturbation directly to the suspended tapered portion to vary the percentage transmission through the fibre by distorting the waveguide geometry of the suspended tapered portion and thereby causing coupling of the modes of the optical signal carried by the tapered portion into higher order bound modes in accordance with the modulation signal.

2. A modulator as claimed in claim 1, wherein the suspended tapered portion of the optical fibre is supported, under tension, between the two support members.

3. A modulator as claimed in claim 1 or claim 2, wherein the minimum radius of the tapered portion is 20 microns.

4. A modulator as claimed in claim 1 or claim 2, wherein the optical fibre assembly is constituted by two optical fibres fused together to form a fused fibre coupler.

5. A modulator as claimed in claim 4, wherein the two fibres have been twisted together.

6. A modulator as claimed in claim 4 or claim 5, wherein a reflector loop is contiguous with the fused coupler.

7. A modulator as claimed in claim 6, wherein the fused coupler and reflector loop are formed from a single fibre.

8. A modulator as claimed in any one of claims 1 to 7, wherein the perturbation applying means comprises a vibratile member.

9. A modulator as claimed in claim 8, wherein the vibratile member imparts a lateral deformation to the tapered portion.

10. A modulator assembly as claimed in claim 8, wherein the vibratile member imparts changes in tension to the tapered portion.

11. A modulator as claimed in any one of claims 8 to 10, wherein the vibratile member comprises a piezo-electric device.

12. A modulator as claimed in any one of claims 1 to 11, wherein the suspended tapered portion is provided with an etched grating on its surface.

13. A modulator as claimed in any one of claims 4 to 11 when used as a switch for changing the coupling ratio between the fibres of the coupler to switch operation of a branch line connected to the coupler.

14. A method of modulating the transmission of optical power through an optical fibre, the method comprising the step of applying a perturbation directly to a tapered portion of the fibre suspended between two support points without any intermediate support, whereby the waveguide geometry of the tapered portion is distorted causing, in use, coupling of optical signal modes carried by the tapered portion into higher order bound mode signal modes.

## Patentansprüche

1. Optischer Signalmodulator, gebildet aus einer Anordnung optischer Fasern mit einer optischen Faser zum Führen eines zu modulierenden optischen Signals, wobei die optische Faser einen zwischen zwei Halterteilen ohne Zwischenhalterung aufgehängten verjüngten Abschnitt aufweist, und mit Mitteln zum Aufbringen einer Modulationssignalstörung direkt auf den aufgehängten verjüngten Abschnitt, um die prozentuale Transmission durch die Faser durch Verzerren der Wellenleitergeometrie des aufgehängten verjüngten Abschnitts zu variieren und dadurch eine Kopplung der Moden des vom verjüngten Abschnitt geführten optischen Signals an gebundene Moden höherer Ordnung gemäß dem Modulationssignal zu bewirken.

2. Modulator nach Anspruch 1, bei dem der aufgehängte verjüngte Abschnitt der optischen Faser unter Spannung zwischen den zwei Halterteilen gehaltert ist.

3. Modulator nach Anspruch 1 oder Anspruch 2, bei dem der minimale Radius des verjüngten Abschnitts 20 µm ist.

4. Modulator nach Anspruch 1 oder Anspruch 2, bei dem die optische Faseranordnung aus zwei optischen Fasern gebildet ist, die miteinander verschmolzen sind, um einen verschmolzenen Faserkoppler zu bilden.

5. Modulator nach Anspruch 4, bei dem die zwei Fasern zusammen verdrillt worden sind.

6. Modulator nach Anspruch 4 oder Anspruch 5, bei dem eine Reflektorschleife an den verschmolzenen Koppler angrenzt.

7. Modulator nach Anspruch 6,
dadurch gekennzeichnet,
daß der verschmolzene Koppler und die Reflektorschleife aus einer einzigen Faser gebildet sind.

8. Modulator nach einem der Ansprüche 1 bis 7, bei dem das Mittel zum Aufbringen von Störungen ein schwingfähiges Glied umfaßt.

9. Modulator nach Anspruch 8, bei dem das schwingfähige Glied auf den verjüngten Abschnitt eine Seitwärtsdeformation ausübt.

10. Modulatoranordnung nach Anspruch 8, bei der das schwingfähige Glied Spannungsänderungen auf den verjüngten Abschnitt ausübt.

11. Modulator nach einem der Ansprüche 8 bis 10, bei dem das schwingfähige Glied eine piezoelektrische Vorrichtung umfaßt.

12. Modulator nach einem der Ansprüche 1 bis 11, bei dem der aufgehängte verjüngte Abschnitt auf seiner Oberfläche mit einem geätzten Gitter versehen ist.

13. Modulator nach einem der Ansprüche 4 bis 11, verwendet als Schalter zum Ändern des Kopplungsverhältnisses zwischen den Fasern des Kopplers, um den Betrieb einer mit dem Koppler verbundenen Zweigleitung zu schalten.

14. Verfahren zum Modulieren der Transmission von optischer Leistung durch eine optische Faser, mit dem Schritt des Ausübens einer Störung direkt auf einen zwischen zwei Haltepunkten ohne Zwischenhalterung aufgehängten verjüngten Abschnitt der Faser, wodurch die Wellenleitergeometrie des verjüngten Abschnitts verzerrt wird, wodurch im Gebrauch Kopplung von vom verjüngten Abschnitt geführten optischen Signalmoden in gebundene Signalmoden höherer Ordnung verursacht wird.

## Revendications

1. Modulateur de signal optique formé par un ensemble à fibre optique comprenant une fibre optique pour porter un signal optique à moduler, la fibre optique ayant une partie effilée suspendue entre deux éléments formant support sans aucun support intermédiaire, et un moyen pour appliquer une perturbation de signal de modulation directement à la partie effilée suspendue pour faire varier le pourcentage de transmission à travers la fibre en déformant la géométrie du guide d'onde de la partie effilée suspendue et provoquant de ce fait le couplage des modes du signal optique porté par la partie effilée dans des modes limites d'ordre plus élevé conformément au signal de modulation.

2. Modulateur comme revendiqué dans la revendication 1, dans lequel la partie effilée suspendue de la fibre optique est supportée, sous tension mécanique, entre les deux éléments formant support.

3. Modulateur comme revendiqué dans la revendication 1 ou la revendication 2, dans lequel le rayon minimum de la partie effilée est de 20 microns.

4. Modulateur comme revendiqué dans la revendication 1 ou la revendication 2, dans lequel l'ensemble à fibres optiques est constitué par deux fibres optiques fondues ensemble pour former un coupleur à fibre fondue.

5. Modulateur comme revendiqué dans la revendication 4, dans lequel les deux fibres ont été torsadées ensemble.

6. Modulateur comme revendiqué dans la revendication 4 ou la revendication 5, dans lequel une boucle à réflecteur est adjacente au coupleur fondu.

7. Modulateur comme revendiqué dans la revendication 6, dans lequel le coupleur fondu et la boucle à réflecteur sont formés à partir d'une fibre unique.

8. Modulateur comme revendiqué dans l'une quelconque des revendications 1 à 7, dans lequel le moyen appliquant la perturbation comprend un élément vibratile.

9. Modulateur comme revendiqué dans la revendication 8, dans lequel l'élément vibratile communique une déformation latérale à la partie effilée.

10. Ensemble modulateur comme revendiqué dans la revendication 8, dans lequel l'élément vibratile communique des variations de tension mécanique à la partie effilée.

11. Modulateur comme revendiqué dans l'une quelconque des revendications 8 à 10, dans lequel l'élément vibratile comprend un dispositif piézo-électrique.

12. Modulateur comme revendiqué dans l'une quelconque des revendications 1 à 11, dans lequel la partie effilée suspendue est munie sur sa surface d'un réseau optique gravé.

13. Modulateur comme revendiqué dans l'une quelconque des revendications 4 à 11 lorsqu'il est utilisé comme commutateur pour faire varier le rapport de couplage entre les fibres du coupleur pour commuter l'exploitation d'une ligne de branchement reliée au coupleur.

14. Procédé de modulation de la transmission de puissance optique à travers une fibre optique, procédé comprenant l'étape d'application d'une perturbation directement à une partie effilée de la fibre suspendue entre deux points de support sans aucun support intermédiaire, ce qui fait que la géométrie du guide d'onde de la partie effilée est déformée provoquant, en fonctionnement, le couplage des modes de signal optique portés par la partie effilée dans des modes de signal à mode limite d'ordre plus élevé.
